# EUROPÄISCHE PATENTSCHRIFT

(11) **EP 2 105 280 B1**
(45) Veröffentlichungstag und Bekanntmachung des Hinweises auf die Patenterteilung: **12.10.2016**
(21) Anmeldenummer: 09155533.4
(22) Anmeldetag: 18.03.2009
(51) Int. Cl.: B29C 65/08

(54) **Verfahren zum Betreiben eines Ultraschallschweißwerkzeuges mit Fluidantrieb**
Method of operating an ultrasound welding tool with fluid drive
Procédé d'utilisation d'un outil de soudure par ultrasons doté d'un entraînement fluidique

(30) Priorität: 27.03.2008 DE 102008015851
(43) Veröffentlichungstag der Anmeldung: 30.09.2009
(73) Patentinhaber: Herrmann Ultraschalltechnik GmbH & Co. KG, 76307 Karlsbad (DE)
(72) Erfinder: Aust, Volker, 75217 Birkenfeld (DE)
(74) Vertreter: WSL Patentanwälte Partnerschaft mbB

(56) Entgegenhaltungen:
- EP-A1- 1 430 985
- WO-A1-88/00881
- DE-A1- 10 021 744
- DE-A1-102005 031 732
- JP-A- H10 115 302
- US-A1- 2005 217 475

## Beschreibung

Die vorliegende Erfindung betrifft ein Verfahren zum Betreiben eines fluidgetriebenen Ultraschallschweißwerkzeuges, wobei das Ultraschallschweißwerkzeug über eine Kolbenstange mit einem in einem Antriebsgehäuse geführten Arbeitskolben verbunden ist, wobei der Arbeitskolben das Antriebsgehäuse in eine Primärkammer und eine Sekundärkammer unterteilt und beide Kammern jeweils über ein Ventil mit einer Fluiddruckquelle verbunden sind.

Dabei wird unter einem Ventil jegliche Vorrichtung verstanden, welche die entsprechende Kammer mit der Fluiddruckquelle wahlweise verbinden oder diese voneinander trennen kann. Selbstverständlich kann die beschriebene Funktion der beiden Ventile auch durch ein einzelnes Regelventil verwirklicht werden, mit dem wahlweise die Primärkammer oder die Sekundärkammer mit der Fluiddruckquelle verbunden werden kann. Unter einem Fluid werden sowohl Gase als auch Flüssigkeiten verstanden.

Solche fluidgetriebenen Ultraschallschweißwerkzeuge sind bekannt. Dabei wird in der Regel das mit der Primärkammer verbundene Ventil zum Erreichen einer Bewegung des Ultraschallschweißwerkzeuges geöffnet. Dadurch wird die Primärkammer mit einer Druckluftquelle verbunden, so daß der Druck in der Primärkammer sprunghaft ansteigt. Da gleichzeitig die Sekundärkammer mit Umgebungsdruck verbunden wird, bewegt sich der Arbeitskolben, so daß das Ultraschallschweißwerkzeug bewegt wird.

Das Ultraschallschweißwerkzeug weist im allgemeinen eine sogenannte Sonotrode auf, mit deren Hilfe die Ultraschallschwingungen in das zu bearbeitende Material übertragen werden. Der Ultraschall wird von einem mit hochfrequenter Wechselspannung beaufschlagtem Konverter erzeugt, welcher ggf. über einen Amplitudentransformator mit der Sonotrode verbunden ist.

Um die Sonotrode von dem zu bearbeitenden Material nach erfolgter Verschweißung wieder wegzubewegen, wird die Primärkammer von der Druckluftquelle getrennt und mit Umgebungsdruck verbunden. Sobald in der Primärkammer lediglich Umgebungsdruck anliegt, ist der Druck in der Sekundärkammer größer als in der Primärkammer, so daß sich der Arbeitskolben in Bewegung setzt und die Primärkammer verkleinert und die Sekundärkammer vergrößert.

Diese Antriebsart hat den Nachteil, daß lediglich der gewünschte Arbeitsdruck, d.h. der Druck, mit der die Sonotrode auf das zu bearbeitende Material drückt, eingestellt werden kann. Der Bewegungsablauf der Sonotrode selbst kann kaum beeinflusst werden.

Darüber hinaus wird gelegentlich die Sekundärkammer mit einem Gegendruck beaufschlagt, um die Ansteuerung verschiedenster Werkzeuge zu ermöglichen. Der Nenndruck in der Sekundärkammer kann jedoch nicht ohne weiteres verstellt werden. Daher muss die Druckluftmenge, die zu Beginn des Schweißvorgangs in die Sekundärkammer eingebracht wird, entsprechend eingestellt werden.

Darüber hinaus ist die Vorschubrichtung der Sonotrode im allgemeinen vertikal ausgerichtet, so daß das eigene Gewicht der Sonotrode ebenfalls an dem Arbeitskolben angreift. Ein Austausch des Ultraschallschweißwerkzeugs bzw. der Sonotrode, der mit einer Gewichtsänderung des Werkzeuges verbunden sein kann, muss daher der Gegendruck in der Sekundärkammer neu eingestellt werden. Während des Schweißvorgangs, d.h. während der Bewegung des Ultraschallschweißwerkzeuges wird jedoch der Gegendruck in der Sekundärkammer konstant gehalten.

Da es zumindest für manche Anwendungsfälle von Vorteil ist, wenn die Absinkgeschwindigkeit des Arbeitskolbens eingestellt werden kann, um ein optimales Schweißergebnis zu erzielen, ist bereits vorgeschlagen worden, das Ultraschallschweißwerkzeug mit einem Servomotor anzutreiben. Hier treibt ein Motor eine Spindel an, die mit dem Ultraschallschweißwerkzeug in Verbindung steht. Der Servomotorantrieb hat den Vorteil, daß nun prinzipiell jeder Bewegungsablauf der Sonotrode durch den Servomotor vorgegeben werden kann. Häufig ist daher zusätzlich ein Positionssensor zur Bestimmung der Position der Sonotrode (oder des mit der Sonotrode verbundenen Arbeitskolbens) vorgesehen, so daß die Bewegung der Sonotrode geregelt werden kann.

Aufgrund äußerer Faktoren, wie z. B. einer Variation der Dicke des zu bearbeitenden Materials kann es jedoch zu einer Änderung des Arbeitsdrucks und damit zu einer Änderung der aufzunehmenden Kraft kommen, die von dem Servomotorantrieb nicht erfaßt wird und das Schweißergebnis beeinträchtigt.

Selbst wenn man alternativ oder zusätzlich zum Positionssensor einen Kraftsensor vorsehen würde, ist die Regelung mittels Servomotor viel zu träge, um plötzlichen Druckänderungen entgegenwirken zu können.

Die DE 10 021 744 A1 beschreibt eine Vorrichtung zur Einstellung des Differenzdruckes in einem Fluidzylinder.

Ausgehend von dem beschriebenen Stand der Technik ist es daher Aufgabe der vorliegenden Erfindung, ein Verfahren zum Betrieben eines Ultraschweißwerkzeuges mit einem Antrieb zur Verfügung zu stellen, das eine hochpräzise Bewegungsregelung erlaubt und zudem unmittelbar auf plötzliche Kraft und/oder Druckschwankungen reagieren kann.

Erfindungsgemäß wird dies durch ein Verfahren gemäß Anspruch 1 gelöst.

Der verwendete Fluidantrieb hat zur Folge, daß er eine "passive Regelung" bereitstellt, die sehr schnell auf plötzliche Druck- und/oder Kraftschwankungen reagieren kann. Erhöht sich beispielsweise aufgrund einer Materialdickenschwankung des zu bearbeitenden Materials die Kraft, mit der die Sonotrode auf das zu bearbeitende Material trifft, plötzlich, so kann der Arbeitskolben der Kraft ausweichen und sich innerhalb des Antriebsgehäuses bewegen.

In einer besonders bevorzugten Ausführungsform sind zwei Sensoren zur Erfassung von zwei physikalischen Eigenschaften vorgesehen, die jeweils ein Ist-Signal abgeben, welches mit der jeweils erfaßten physikalischen Eigenschaft in Beziehung stehen, wobei das erste Ist-Signal über einen Regelkreis die beiden Ventile so regelt, daß die erste erfaßte physikalische Eigenschaft einem Sollwert-Profil folgt, wenn das erste Signal kleiner oder gleich einem vorgegebenen Schwellwert ist, und das zweite Ist-Signal über einen Regelkreis die beiden Ventile so regelt, daß die zweite erfaßte physikalische Eigenschaft einem Sollwert-Profil folgt, wenn das erste Signal größer als der vorgegebene Schwellwert ist.

Insbesondere dann, wenn sich der Bewegungsablauf der Ultraschallschweißvorrichtung aus mehreren Phasen zusammensetzt, wie z. B. Absinkbewegung, um die Sonotrode in Richtung des zu bearbeitenden Materials zu bewegen, Schweißbewegung, während die Sonotrode mit dem zu bearbeitenden Material in Kontakt steht, und Hubbewegung, um die Sonotrode nach dem Schweißen wieder von dem Material abzuheben, kann durch diese Maßnahme der Bewegungsablauf für die einzelnen Phasen unterschiedlich geregelt werden.

So kann beispielsweise die Position des Arbeitskolbens erfaßt werden und solange die Sonotrode noch genügend weit von dem zu bearbeitenden Material entfernt ist, die Position des Arbeitskolbens geregelt werden. Sobald der Positionssensor anzeigt, daß sich die Sonotrode dem zu bearbeitenden Material annähert, kann dann die Druckdifferenz zwischen der Primär- und der Sekundärkammer geregelt werden.

Alternativ kann vorgesehen sein, daß zwei Sensoren zur Erfassung von zwei physikalischen Eigenschaften vorgesehen sind, die jeweils ein Ist-Signal abgeben, welches mit der jeweils erfaßten physikalischen Eigenschaft in Beziehung steht, wobei das zweite Ist-Signal über einen Regelkreis die beiden Ventile so regelt, daß die erste erfaßte physikalische Eigenschaft einem Sollwert-Profil folgt, wenn das zweite Signal kleiner oder gleich einem vorgegebenen Schwellwert ist, und das zweite Ist-Signal über einen Regelkreis die beiden Ventile so regelt, daß die zweite erfaßte physikalische Eigenschaft einem Sollwert-Profil folgt, wenn das zweite Signal größer als der vorgegebenen Schwellwert ist.

Beispielsweise kann die Druckdifferenz zwischen Sekundär- und Primärkammer erfaßt werden und solange diese Differenz einen bestimmten Wert nicht überschreitet, die Position des Arbeitskolbens geregelt werden. Sobald die erfaßte Druckdifferenz über einen bestimmten Wert ansteigt, kann dann die Druckdifferenz zwischen der Primär- und der Sekundärkammer geregelt werden.

Besonders bevorzugt ist die erste physikalische Eigenschaft die Position des Arbeitskolbens und die zweite physikalische Eigenschaft die Druckdifferenz oder das Druckverhältnis zwischen dem Druck der Primärkammer und dem Druck der Sekundärkammer.

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figuren. Es zeigen:
- Figur 1: eine schematische Darstellung eines angetriebenen Ultraschallschweißwerkzeuges mit Fluidantrieb des Standes der Technik,
- Figur 2: eine schematische Darstellung eines Ultraschallschweißwerkzeuges mit Servomotor des Standes der Technik und
- Figur 3: eine bevorzugte Ausführungsform der vorliegenden Erfindung.

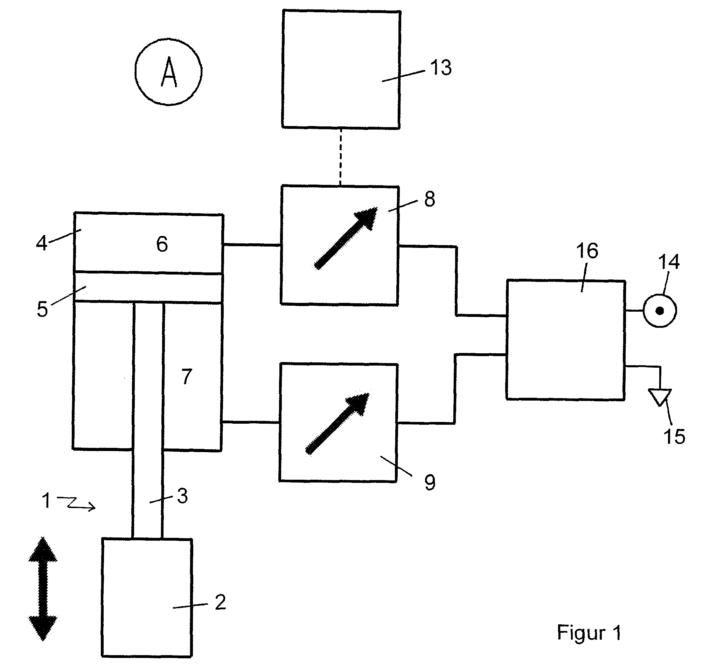

In Figur 1 ist ein Ultraschallschweißwerkzeug 1 dargestellt. Das Ultraschallschweißwerkzeug 1 weist eine Sonotrode 2 auf, die über eine Kolbenstange 3 mit einem in einem Antriebsgehäuse 4 geführten Arbeitskolben 5 verbunden ist, wobei der Arbeitskolben 5 das Antriebsgehäuse 4 in eine Primärkammer 6 und eine Sekundärkammer 7 unterteilt. Die Primärkammer 6 ist über einen ersten Druckregler 8 mit einem Ventil 16 verbunden, das wiederum die Primärkammer 6 wahlweise mit einer Fluiddruckquelle 14 oder mit Umgebungsdruck verbindet. Eine Steuerung 13 bewirkt das Öffnen und Schließen des Druckregler 8. Mit anderen Worten bilden die Steuerung 13 und der Druckregler 8 zusammen eine Druckregelung für den Druck in der Primärkammer 6. Dabei kann die Primärkammer wahlweise mit der Druckluftquelle 14 oder mit Umgebungsdruck 15 verbunden werden.

Die Sekundärkammer 7 wird über einen zweiten Druckregler 9 wahlweise mit einer Fluiddruckquelle 14, um in der Sekundärkammer 7 einen Gegendruck zu erzeugen, oder mit Umgebungsdruck verbunden.

Bevor diese Ausführungsform des Standes der Technik in Betrieb genommen werden kann, muss zunächst die Sekundärkammer 7 über das Ventil 16 mit Druckluft versorgt werden. Der Druck in der Sekundärkammer 7 muss zumindest so groß gewählt werden, daß, wenn die Primärkammer 6 mit Umgebungsdruck beaufschlagt wird, sich der Arbeitskolben 5 entgegen der Gewichtskraft, die durch das Eigengewicht des Arbeitskolbens 5, der Schubstange 3 sowie der Sonotrode 2 bestimmt wird, nach oben, d.h. von dem zu bearbeitenden Material wegbewegt.

Um die Sonotrode nach unten, in Richtung des zu bearbeitenden Materials (nicht gezeigt) oder nach oben, d.h. von dem zu bearbeitenden Material wegzubewegen, wird durch die Steuerung 13 der Druckregler 8 eingestellt, so daß sich in der Primärkammer 6 ein entsprechender Druck aufbaut. Sobald der Druck in der Primärkammer 6 den Druck in der Sekundärkammer 7 überschreitet, wird sich der Arbeitskolben 5 nach unten bewegen, was zu einer Bewegung der Sonotrode in Richtung des zu bearbeitenden Materials führt.

Sobald der Schweißvorgang beendet ist, wird das Ventil 16 umgeschaltet und die Primärkammer 6 belüftet, d.h. mit Umgebungsdruck verbunden. Dies hat zur Folge, daß sich der Arbeitskolben wieder nach oben bewegt, da dann der Druck in der Sekundärkammer 7 größer ist als der Druck in der Primärkammer 6.

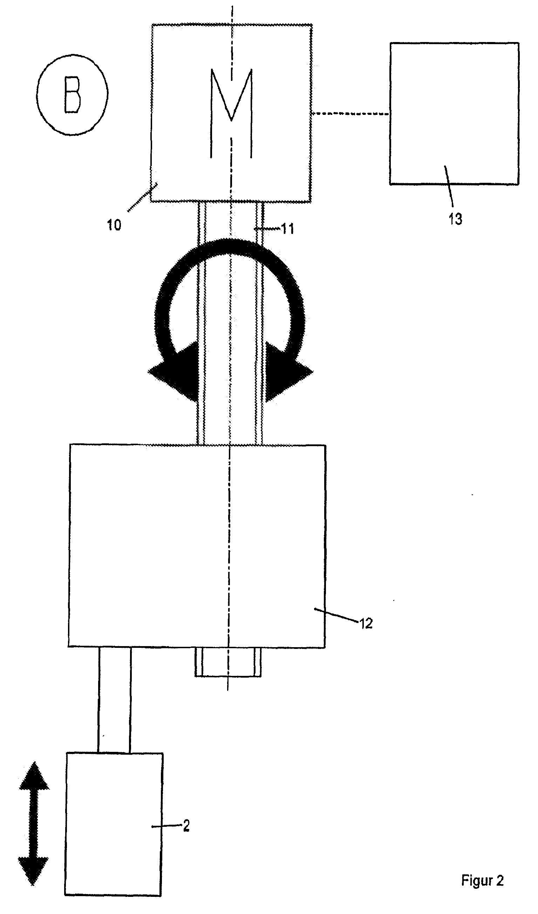

In Figur 2 ist eine alternative Ausführungsform schematisch dargestellt, die ebenfalls aus dem Stand der Technik bekannt ist. Bei dieser beeinflusst eine Steuerung 13 einen Motor 10, der mit einer Spindel 11 verbunden ist. Diese Spindel 11 treibt die Halterung 12 der Sonotrode 2 an. Zur Vor- und/oder Rückbewegung der Sonotrode 2 veranlasst die Steuerung 13 den Motor 10, die Spindel 11 zu drehen.

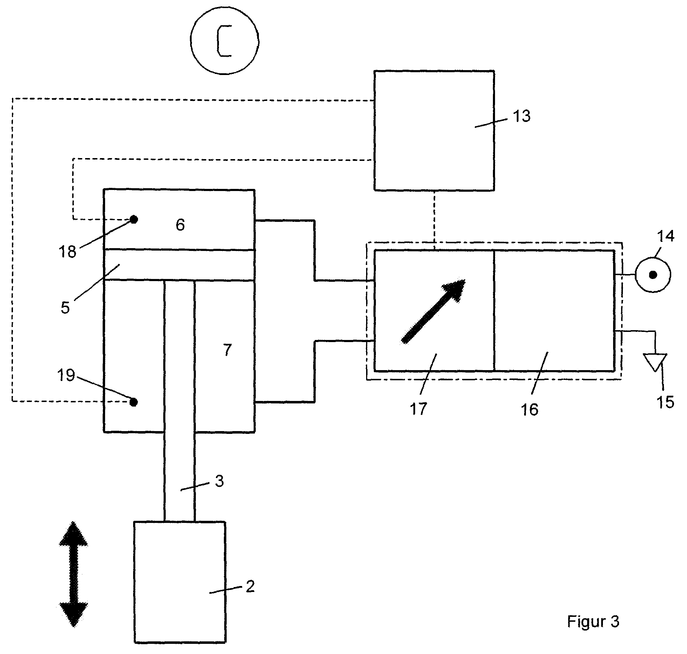

In Figur 3 ist eine besonders bevorzugte Ausführungsform der vorliegenden Erfindung gezeigt. Hier ist die Sonotrode 2 - ähnlich wie in der Ausführungsform des Standes der Technik gemäß Figur 1 - über eine Schubstange 3 mit einem Arbeitskolben 5 verbunden, der ein Antriebsgehäuse 4 in eine Primärkammer 6 und eine Sekundärkammer 7 unterteilt.

Mit Hilfe des Druckreglers 17, über den sowohl die Primärkammer 6 als auch die Sekundärkammer 7 mit der Druckluftquelle 14 oder mit Umgebungsdruck 15 verbunden werden kann und derdurch die Steuerung13 angesteuert wird, ist es möglich, die Druckdifferenz zwischen dem Druck in der Primärkammer 6 und dem Druck in der Sekundärkammer 7 zu regeln. Dazu wird mit Hilfe der Sensoren 18, 19 der Druck in Primär- und Sekundärkammer 6,7 erfaßt.

Sowohl der gezeigte Druckregler 17 als auch das Ventil 16 sind Mehrwegeelemente, die auch durch mehrere getrennte Elemente verwirklicht werden könnten. So könnte die Primärkammer 6 über einen ersten Druckregler und ein erstes Ventil mit der Druckluftquelle 14 oder dem Umgebungsdruck 15 verbunden sein, während die Sekundärkammer 7 über einen zweiten Druckregler und ein zweites Ventil mit der Druckluftquelle 14 oder dem Umgebungsdruck 15 verbunden sein könnte. In der dargestellten Ausführungsform sind sowohl der erste und der zweite Druckregler als auch das erste und das zweite Ventil durch entsprechende Kombinationselemente ersetzt worden. Selbstverständlich sollen beide Varianten vom Schutz umfaßt sein.

Die erfindungsgemäße Ausführungsform kombiniert die Vorteile der bekannten pneumatischen und elektromechanischen Antriebssysteme. Die pneumatische Regelung erlaubt eine hochpräzise Bewegung der Sonotrode. Dabei kann beispielsweise die Geschwindigkeit und/oder die Position der Sonotrode bzw. des Antriebskolbens geregelt werden.

Im Gegensatz zu der bekannten Regelung mittels eines Servomotors liegt bei der erfindungsgemäßen Ausführungsform kein zwangsgeführter Bewegungsablauf der Schweißwerkzeuge vor, da das System aufgrund der pneumatischen Lagerung bei unerwarteten Kraftschwankungen, z. B. einer Gegenkraft im Schweißprozess aufgrund von Materialdickenschwankungen, ein ausreichend "weiches" Verhalten zeigt, um solche Kraftschwankungen auszugleichen und zu kompensieren. Bei plötzlichen Kraftstößen kann somit das Pneumatiksystem federnd angreifen und das System dämpfen.

Darüber hinaus hat der verwendete Pneumatikzylinder bessere Leichtlaufeigenschaften als die Spindel/Mutter-Komponente des Servoantriebs.

In einer bevorzugten Ausführungsform wird direkt in der Primär- und Sekundärkammer des Pneumatikzylinders der momentane Druck gemessen und als Regelgröße genutzt. Im Gegensatz zum bekannten Servoantrieb wird keine indirekte physikalische Größe (z. B. die Stromaufnahme eines Elektromotors) genutzt, um davon die aufgebrachte Kraft abzuleiten.

Darüber hinaus ist es möglich, den Bewegungsablauf in verschiedene Phasen aufzuteilen, so daß eine schnelle Absenkung der Sonotrode und eine entsprechend präzisere Bewegung erfolgen kann, wenn die Sonotrode mit dem zu bearbeitenden Material in Kontakt tritt. Durch geeignete Umschaltung bzw. Parallelbetreibung von Positions-, Geschwindigkeits- und Kraftregelung lässt sich ein optimales Anschmelz- und Fügeverhalten während des gesamten Schweißprozesses reproduzierbar erzielen.

Des weiteren kann der gesamte Systemhub in Zustellhub und Arbeitshub aufgeteilt werden. Hierbei kann der Zustellhub mit maximaler Geschwindigkeit (maximaler Beschleunigung) realisiert werden. Der Arbeitshub hingegen wird mit der größtmöglichen Genauigkeit und der prozessspezifischen Geschwindigkeit durchgeführt.

Dies wird möglich, ohne auf die Auslegung eines mechanischen Bauteils (z. B. Spindelsteigung, Vorspannung und Genauigkeitsklasse einer mechanischen Spindel) angewiesen zu sein.

### Bezugszeichenliste

- 1: Ultraschallwerkzeug
- 2: Sonotrode bzw. Schwinggebilde
- 3: Kolbenstange
- 4: Antriebsgehäuse
- 5: Arbeitskolben
- 6: Primärkammer
- 7: Sekundärkammer
- 8: Druckregler
- 9: Druckregler
- 10: Motor
- 11: Spindel
- 12: Halterung
- 13: Steuerung
- 14: Druckluftquelle
- 15: Umgebungsdruck
- 16: Ventil
- 17: Ventil
- 18: Sensor
- 19: Sensor

## Patentansprüche

1. Verfahren zum Betreiben eines Ultraschallschweißwerkzeuges mit Fluidantrieb, wobei das Ultraschallschweißwerkzeug (2) über eine Kolbenstange (3) mit einem in einem Antriebsgehäuse (4) geführten Arbeitskolben (5) verbunden ist, wobei der Arbeitskolben (5) das Antriebsgehäuse (4) in eine Primärkammer (6) und eine Sekundärkammer (7) unterteilt, wobei entweder zwei Ventile vorgesehen sind, wobei beide Kammern jeweils über ein Ventil (16) mit einer Fluiddruckquelle verbindbar sind, oder ein Regelventil vorgesehen ist, mit dem wahlweise die Primärkammer oder die Sekundärkammer mit der Fluiddruckquelle verbindbar ist, wobei zwei Sensoren zur Erfassung von zwei physikalischen Eigenschaften vorgesehen sind, die jeweils ein Ist-Signal abgeben, welches mit der jeweils erfaßten physikalischen Eigenschaft in Beziehung steht, wobei die erste physikalische Eigenschaft die Position des Kolbens ist, **dadurch gekennzeichnet, dass** entweder,
wenn das erste Ist-Signal kleiner oder gleich einem vorgegebenen Schwellwert ist, das erste Ist-Signal über einen Regelkreis die beiden Ventile oder das Regelventil so regelt, dass die erste erfaßte physikalische Eigenschaft einem Sollwertprofil folgt, und, wenn das erste Signal größer als der vorgegebene Schwellwert ist, das zweite Ist-Signal über einen Regelkreis die beiden Ventile oder das Regelventil so regelt, dass die zweite erfasste physikalische Eigenschaft einem Sollwertprofil folgt,
oder,
wenn das zweite Ist-Signal kleiner oder gleich einem vorgegebenen Schwellwert ist, das erste Ist-Signal über einen Regelkreis die beiden Ventile oder das Regelventil so regelt, dass die erste erfaßte physikalische Eigenschaft einem Sollwertprofil folgt, und, wenn das zweite Signal größer als der vorgegebene Schwellwert ist, das zweite Ist-Signal über einen Regelkreis die beiden Ventile oder das Regelventil so regelt, dass die zweite erfasste physikalische Eigenschaft einem Sollwertprofil folgt.

## Claims

1. Method for operating an ultrasonic welding tool with fluid drive, wherein the ultrasonic welding tool (2) is connected by way of a piston rod (3) to a working piston (5) which is guided in a housing (4) of the drive, wherein the working piston (5) sub-divides the drive housing (4) into a primary chamber (6) and a secondary chamber (7), wherein either two valves are provided, wherein each of the chambers is able to communicate by way of a valve (16) with a fluidized pressure source, or a control valve is provided, with which optionally the primary chamber or the secondary chamber are able to communicate with the fluidized pressure source, wherein two sensors for detecting of two physical properties are provided, which each emit an actual signal which is in relationship with each of the physical properties detected, wherein the first physical property is the position of the piston, **characterized in that** either,
if the first signal is smaller than, or equal to, a given threshold value, the first actual signal via a control circuit controls the two valves or the control valve in such a way that the first physical property detected follows a reference value profile, and, if the first signal is greater than the given threshold value, the second actual signal via a control circuit controls the two valves or the control valve in such a way that the second physical property detected follows a reference value profile,
or,
if the second actual signal is smaller than, or equal to, a given threshold value, the first actual signal via a control circuit controls the two valves or the control valve in such a way that the first physical property detected follows a reference value profile, and, if the second signal is greater than the given threshold value, the second actual signal via a control circuit controls the two valves or the control valve in such a way that the second physical property detected follows a reference value profile.

## Revendications

1. Procédé d'exploitation d'un outil de soudage à ultrasons à entraînement fluidique, l'outil de soudage à ultrasons (2) étant relié par d'une tige de piston (3) à un piston moteur (5) guidé dans un carter d'entraînement (4), le piston moteur (5) divisant le carter d'entraînement en une chambre primaire (6) et une chambre secondaire (7), dans lequel soit deux soupapes sont prévues, chacune des deux chambres étant apte à être reliée à une source de fluide sous pression par l'intermédiaire d'une soupape (16), soit une soupape de commande est prévue, par laquelle la chambre primaire et la chambre secondaire sont aptes à être reliées à la source de fluide sous pression, deux capteurs étant prévus pour acquérir deux propriétés physiques et délivrer chacun un signal réel qui est en rapport avec la propriété physique acquise correspondante, la première propriété physique étant la position du piston, **caractérisé en ce que**
soit
lorsque le premier signal réel est plus inférieur ou égal à un seuil prédéterminé, le premier signal réel commande les deux soupapes ou la soupape de commande à travers un circuit de commande de telle manière que la première propriété physique acquise suive un profil de consigne prédéterminé et, lorsque le premier signal est supérieur au seuil prédéterminé, le deuxième signal réel commande les deux soupapes ou la soupape de commande à travers un circuit de commande de telle manière que la deuxième propriété physique acquise suive un profil de consigne,
soit
lorsque le deuxième signal réel est inférieur ou égal à un seuil prédéterminé, le premier signal réel commande les deux soupapes ou la soupape de commande à travers un circuit de commande de telle manière que la première propriété physique acquise suive un profil de consigne prédéterminé et, lorsque le deuxième signal est supérieur au seuil prédéterminé, le deuxième signal réel commande les deux soupapes ou la soupape de commande à travers un circuit de commande de telle manière que la deuxième propriété physique acquise suive un profil de consigne.
